# EUROPÄISCHE PATENTSCHRIFT

(11) **EP 2 321 165 B1**
(45) Veröffentlichungstag und Bekanntmachung des Hinweises auf die Patenterteilung: **09.09.2015**
(21) Anmeldenummer: 09780374.6
(22) Anmeldetag: 09.07.2009
(51) Int. Cl.: B60W 20/00, B60K 6/48, B60W 10/06, B60W 10/08

(54) **VERFAHREN UND VORRICHTUNG ZUR ERKENNUNG EINES LAUFENDEN VERBRENNUNGSMOTORS BEI EINEM HYBRIDFAHRZEUG**
METHOD AND DEVICE FOR DETECTING A RUNNING INTERNAL COMBUSTION ENGINE IN A HYBRID VEHICLE
PROCÉDÉ ET DISPOSITIF DE RECONNAISSANCE D'UN MOTEUR À COMBUSTION INTERNE EN COURS DE FONCTIONNEMENT DANS UN VÉHICULE HYBRIDE

(30) Priorität: 07.08.2008 DE 102008041108
(43) Veröffentlichungstag der Anmeldung: 18.05.2011
(73) Patentinhaber: Robert Bosch GmbH, 70442 Stuttgart (DE)
(72) Erfinder: PANTRING, Juergen, 71701 Schwieberdingen (DE); WEISS, Ruediger, 71159 Moetzingen (DE); TONYE DJON, Jean-Marc, 70435 Stuttgart (DE); HUBER, Armin, 73760 Ostfildern (DE); KROEPKE, Karsten, Shanghai/ Pudong New Area 201206 (CN)
(86) Internationale Anmeldenummer: PCT/EP2009/058748
(87) Internationale Veröffentlichungsnummer: WO 2010/015483

(56) Entgegenhaltungen:
- EP-A1- 1 143 134
- EP-A1- 1 750 111
- EP-A1- 1 852 594

## Beschreibung

### Stand der Technik

Verfahren zur Erkennung eines laufenden Verbrennungsmotors bei einem Hybridfahrzeug, bei welchem der Verbrennungsmotor als erstes Antriebsaggregat und ein zweites Antriebsaggregat einen Beitrag zum Antrieb des Hybridfahrzeuges leisten sowie eine Vorrichtung zur Durchführung des Verfahrens.

Fahrzeuge mit einer hybriden Antriebsstruktur weisen einen Verbrennungsmotor und als zweites Antriebsaggregat meistens einen Elektromotor auf. So kann das Antriebsmoment während des Fahrbetriebes des Hybridfahrzeuges von beiden Antriebsaggregaten aufgebracht werden.

Treten bei dem Verbrennungsmotor Fehler auf, machen sich diese durch Aussetzer auf den Zylindern des Verbrennungsmotors bemerkbar.

Dauerhafte Aussetzer auf allen Zylindern des Verbrennungsmotors fallen bei einem Hybridfahrzeug nicht weiter auf, da das zweite Antriebsaggregat den Fahrbetrieb des Hybridfahrzeuges weiter gewährleistet. Mittels bekannter Laufunruheverfahren werden dauerhafte Aussetzer auf allen Zylindern nicht erkannt, da die Laufunruhe optimal ist. Alle Zylinder liefern eine gleich lange Segmentzeit.

Aus der DE 10 2006 012 868 A1 ist ein Verfahren zur Diagnose von Aussetzern einer Brennkraftmaschine bekannt, die gemeinsam mit einem Elektromotor in einem Hybridfahrzeug angeordnet ist. Dabei werden die Signale der Steuerung des Verbrennungsmotors mit den Signalen des Elektromotors verkoppelt, so dass mit diesen Signalen eine Diagnose des Verbrennungsmotors hinsichtlich des Auftretens von Verbrennungsaussetzern Mittels einer Schwingungsanalyse durchgeführt werden kann. EP 1 852 594 A1 beschreibt ein Verfahren nach dem Oberbegriff des Anspruchs 1.

### Offenbarung der Erfindung

Das erfindungsgemäße Verfahren zur Erkennung eines laufenden Verbrennungsmotors bei einem Hybridfahrzeug mit den Merkmalen des Anspruchs 1 weist den Vorteil auf, dass ein Verbrennungsmotor im Aussetzerbetrieb auf allen Zylindern ohne Zusatzkomponenten erkannt werden kann, wodurch eine sehr kostengünstige Analyse des Verhaltens des Verbrennungsmotors möglich ist. Durch ein an sich vorhandenes Motorsteuergerät, welches den Betrieb des Verbrennungsmotors steuert und regelt, wird aktiv ein Störsignal in den laufenden Betriebsablauf des Verbrennungsmotors eingebracht und die Reaktion des Verbrennungsmotors auf dieses Störsignal ausgewertet, wobei bei einer ausbleibenden Reaktion des Verbrennungsmotors auf das Störsignal darauf geschlossen wird, dass der Verbrennungsmotor nicht arbeitet.

In einer Weiterbildung der Erfindung wird mindestens ein Verbrennungsparameter des Verbrennungsmotors geändert und eine Laufunruhe des Verbrennungsmotors überwacht, wobei bei Ausbleiben einer Veränderung der Laufunruhe infolge der Änderung des Verbrennungsparameters darauf geschlossen wird, dass dauerhafte Aussetzer auf allen Zylindern des Verbrennungsmotors auftreten. Durch die aktive Veränderung des Verbrennungsparameters des Verbrennungsmotors wird eine erhöhte Laufunruhe erzwungen, die ausgewertet wird. Läuft der Verbrennungsmotor nicht selbständig, wie es bei dauerhaften Aussetzern auf allen Zylindern der Fall ist, wird der Verbrennungsmotor auf die Veränderung der Verbrennungsparameter nicht reagieren. Das bedeutet, dass keine erhöhten Laufunruheaktivitäten nachweisbar sind, was somit als Fehler erkannt wird.

In einer zusätzlichen Variante wird die Störgröße verstärkt. Damit wird eine zusätzliche Gewissheit darüber erreicht, dass keine Verbrennungen stattfinden. Eine vorzeitige ungerechtfertigte Abschaltung der Einspritzung wird somit vermieden. Mittels dieser einfachen Diagnostik kann der Verbrennungsmotor unverzüglich abgeschaltet werden, um zu verhindern, dass der unverbrannte Kraftstoff auf den heißen Katalysator trifft. Vorteilhafterweise wird als Verbrennungsparameter der Zündwinkel mindestens eines Zylinders des Verbrennungsmotors aktiv verstellt. Eine aktive Verstellung des Zündwinkels ist einfach und schnell möglich. Der Einfluss auf eine Verschlechterung des Abgases durch den Verstellbereich kann dabei begrenzt werden.

Um in der Summe eine Neutralität zum Antriebsmoment des Hybridfahrzeuges zu gewährleisten, werden die Zündwinkel der Zylinder so eingestellt, dass bei einer vorgegebenen Anzahl von Zylindern eine verzögerte Zündung eintritt, während bei einer gleichen Anzahl von Zylindern eine vorzeitige Zündung auftritt. Diese kurzzeitige ungleiche Einstellung der Antriebsmomente der einzelnen Zylinder führt bei einem laufenden Verbrennungsmotor zu einer Erhöhung der Laufunruhe. Tritt diese Laufunruhe auf, wird der Verbrennungsmotor als laufend erkannt, unterbleibt die Laufunruhe ist der Verbrennungsmotor inaktiv.

Um ein zuverlässiges und sicheres Ergebnis zu erlangen, wird die Verstellung der Zündwinkel mehrfach wiederholt.

Als Verbrennungsparameter zur Erzielung der veränderten Laufunruhe wird eine Einspritzmenge kurzzeitig verstellt.

In einer weiteren Ausgestaltung der Erfindung besteht eine Vorrichtung zur Erkennung eines laufenden Verbrennungsmotors bei einem Hybridfahrzeug, aus einem Verbrennungsmotor und einem zweiten Antriebaggregat, wobei der Verbrennungsmotor als erstes Antriebsaggregat und das zweite Antriebsaggregat gemeinsam einen Beitrag zum Antrieb des Hybridfahrzeuges leisten. Um im Hybridbetrieb des Fahrzeuges sicher festzustellen, ob der Verbrennungsmotor läuft, sind Mittel vorhanden, die aktiv ein Störsignal in den laufenden Betriebsablauf des Verbrennungsmotors einbringen und die Reaktion des Verbrennungsmotors auf dieses Störsignal auswerten, wobei bei einer ausbleibenden Reaktion des Verbrennungsmotors auf das Störsignal darauf geschlossen wird, dass der Verbrennungsmotor nicht arbeitet. Durch Änderung der Software im Motorsteuergerät kann ein solches Störsignal leicht erzeugt werden, wodurch das Fehlverhalten des Verbrennungsmotors erkannt wird, ohne dass weitere Komponenten benötigt werden.

In einer Ausgestaltung der Erfindung ändern die Mittel mindestens einen Verbrennungsparameter des Verbrennungsmotors und überwachen eine Laufunruhe des Verbrennungsmotors, wobei bei Ausbleiben der Veränderung der Laufunruhe darauf geschlossen wird, dass dauerhafte Aussetzer auf allen Zylindern des Verbrennungsmotors auftreten. Reagiert der Verbrennungsmotor nicht auf die Änderung des Verbrennungsparameters, wird dies als Fehler erkannt und festgestellt, dass der Verbrennungsmotor nicht arbeitet.

In einer einfachen und besonders kostengünstigen Ausführung wird die Laufunruhe des Verbrennungsmotors durch einen Drehzahlmesser überwacht.

### Kurze Beschreibung der Zeichnungen

Die Erfindung lässt zahlreiche Ausführungsformen zu. Eine davon soll anhand der in der Zeichnung dargestellten Figuren näher erläutert werden.

Es zeigt:
- Figur 1:: Prinzipdarstellung eines Fahrzeuges mit Hybridantrieb
- Figur 2:: schematisches Ablaufdiagramm eines Ausführungsbeispieles des erfindungsgemäßen Verfahrens
- Figur 3:: Darstellung der Laufunruhe über dem Zündwinkel und der Zeit

### Ausführungsformen der Erfindung

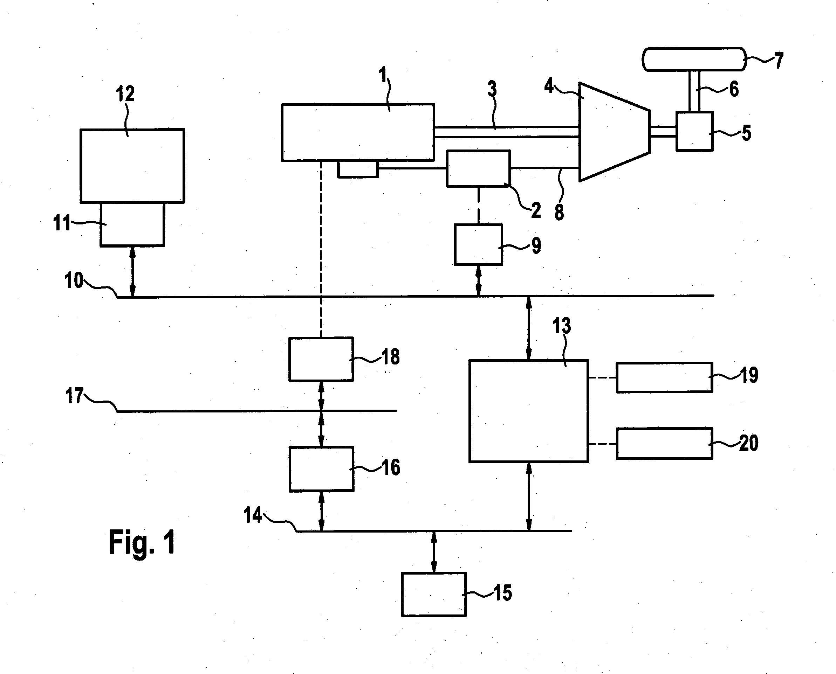

Figur 1 zeigt eine Prinzipdarstellung für ein Fahrzeug mit einem Hybridantrieb. Der Hybridantrieb wird von einem Verbrennungsmotor 1 als erste Antriebseinheit und einem Elektromotor 2 als zweite Antriebseinheit gebildet.

Der Verbrennungsmotor 1, in diesem Falle ein 4-Takt-Ottomotor, ist über den Antriebsstrang 3 mit dem Getriebe 4 verbunden, welches wiederum über das Differential 5 auf die Radachse 6 zum Antrieb des Rades 7 führt.

Der Elektromotor 2 ist über einen eigenen Antriebsstrang 8 mit dem Getriebe 4 verbünden und trägt damit zum Antrieb der Räder 7 und zum Gesamtdrehmoment des Fahrzeuges bei. Darüber hinaus verfügt der Elektromotor 2 über ein eigenes Elektromotorsteuergerät 9, welches an einen Hybrid CAN-Bus 10 angeschlossen ist, über welchen alle die Steuergeräte miteinander kommunizieren, die Einfluss auf den hybridspezifischen Fahrbetrieb des Fahrzeuges haben. Dazu gehört unter anderem das Batteriemanagementsystem 11 der Hochvoltbatterie 12. Die Hochvoltbatterie 12 ist mit dem Elektromotor 2 verbunden und versorgt diesen mit elektrischer Energie.

Ein Fahrzeugsteuergerät 13 kommuniziert über den Hybrid CAN Bus 10 mit dem daran angeschlossenen Elektromotorsteuergerät 9, und dem Batteriemanagementsystem 11. Darüber hinaus ist es über den CAN Bus 14 u. a. mit einem ESP-Steuergerät 15 und anderen nicht weiter dargestellten Steuergeräten der Fahrzeugsicherheits- und Fahrerassistenzsysteme des Fahrzeuges verbunden.

Über ein Gateway 16 steht der CAN Bus 14 mit einem Gateway CAN Bus 17 in Verbindung, über welchen die einzelnen Bussysteme des Fahrzeuges miteinander kommunizieren.

Das Motorsteuergerät 18 des Verbrennungsmotors 1 ist über den Gateway-CAN Bus 17 und den CAN Bus 14 mit dem Fahrzeugsteuergerät 13 verbunden.

Das Fahrzeugsteuergerät 13 ist mit Drehzahlgebern 19 und 20 verbunden, von welchem das Fahrzeugsteuergerät 13 Informationen über die aktuellen Betriebsparameter des Fahrzeugbetriebes erhält.

Bei der vorliegenden Anordnung wird das für den Abtrieb relevante Drehmoment sowohl vom Verbrennungsmotor 1 als auch vom Elektromotor 2 aufgebracht.

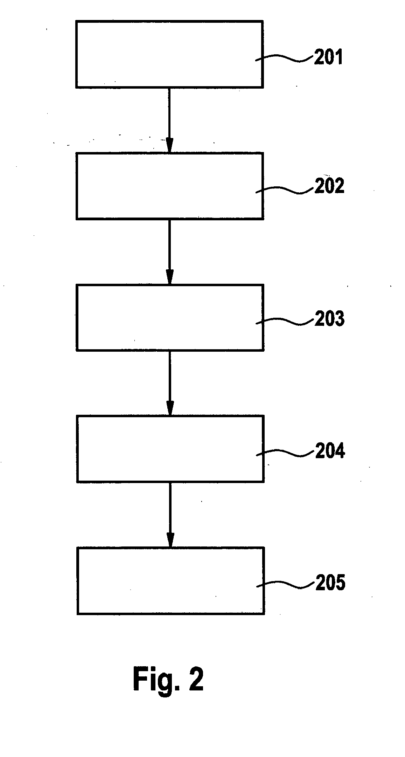

Anhand von Figur 2 soll nun eine mögliche Ausführungsform der Erfindung erläutert werden, mittels welcher festgestellt werden soll, ob der Verbrennungsmotor 1 im Betrieb ist und einen Beitrag zum Antrieb des Hybridfahrzeuges leistet.

Im Block 201 wird davon ausgegangen, dass nach dem Motorstart sowohl der Verbrennungsmotor 1 als auch der Elektromotor 2 in Betrieb sind und beide ein Antriebsmoment an das Hybridfahrzeug abgeben.

Im Block 202 wird durch das Motorsteuergerät 18 der Zündwinkel des Verbrennungsmotors 1 aktiv verstellt. Der Verbrennungsmotor 1 weist 4 Zylinder auf, wovon 2 Zylinder so verstellt werden, dass eine spätere Zündung als im Normalfall (optimaler Zündwinkel) erfolgt, was bedeutet, dass von diesen beiden Zylindern nur ein begrenztes Antriebsmoment an das Fahrzeug weitergegeben wird. Die beiden verbleibenden Zylinder werden so verstellt, dass die Zündung nach vorn verschoben wird, was zur Folge hat, dass ein größeres Antriebsmoment an das Fahrzeug abgegeben wird. Hinsichtlich des Antriebsmomentes wird durch die beschriebene Verstellung des Zündwinkels an den vier Zylindern eine gewisse Neutralität erreicht, so dass die Verstellung des Zündwinkels am Antriebsverhalten des Fahrzeuges nicht nachweisbar ist.

Im Block 203 wird nun überwacht, ob diese kurzzeitige ungleiche Einstellung der Momente der vier Einzelzylinder zu einer Erhöhung der Laufunruhe des Verbrennungsmotors 1 führt, was durch den Drehzahlgeber 19 gemessen und an das Motorsteuergerät 18 weitergegeben wird. Die Laufunruhe äußert sich in einem nicht ganz gleichmäßigen Drehzahlsignal.

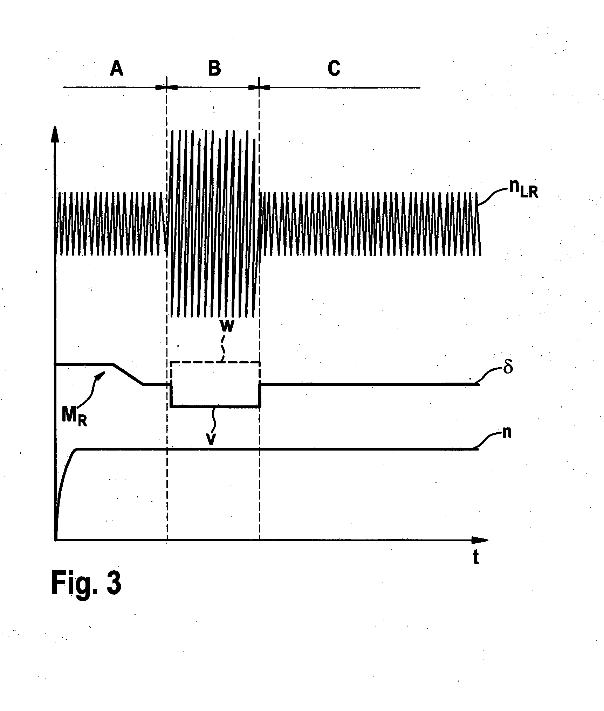

Das Motorsteuergerät 18 wertet im Block 204 die Ergebnisse der Drehzahlmessung des Verbrennungsmotors 1 aus. Erhöht sich die Laufunruhe des Verbrennungsmotors 1 infolge der Zündwinkelverstellung, das heißt die Schwingungsamplitude des Verbrennungsmotors 1 wird größer, wie es in Figur 3 , dargestellt ist, wird davon ausgegangen, dass der Verbrennungsmotor 1 aktiv ist und wenigstens ein Zylinder ohne Zündaussetzer arbeitet.

Bleibt die Drehzahlmessung nach der Verstellung der Zündwinkel aber konstant, wird darauf erkannt, dass ein Fehler vorliegt und der Verbrennungsmotor 1 nicht arbeitet, was damit gleichzusetzen ist, dass er auf allen Zylindern dauerhafte Aussetzer hat.

Wird ein solcher Fehler erkannt, wird im Block 205 der Verbrennungsmotor abgeschaltet.

In Figur 3 ist in der oberen Darstellung die durch die Drehzahlmessung detektierte Laufunruhe n_{LR} des Verbrennungsmotors 1 dargestellt. In der mittleren Darstellung ist der Zündwinkel δ und in der unteren Darstellung die Drehzahl n, wie sie dem Fahrer durch einen Drehzahlmesser im Kraftfahrzeug angezeigt wird, gezeigt. Alle drei Darstellungen sind über der Zeit t dargestellt.

Zum Zeitpunkt des Starts des Verbrennungsmotors 1 weist die Laufunruhe in Form der Drehzahl im Bereich A einen annähernd konstanten mittleren Wert n_{LR} auf. Beim Zündwinkel δ wird im selben Bereich A eine Drehmomentenreserve M_{R} aufgebaut, um vor der Aktivierung der Funktion durch eine Frühverstellung der Zündung auch eine Momentenerhöhung erzielen zu können. Die Drehzahl n, welche dem Fahrer angezeigt wird, stabilisiert sich nach dem Start auf einem konstanten Niveau.

Im Abschnitt B werden, wie beschrieben, zwei Zylinder spät verstellt (Kurve v) und zwei Zylinder früh verstellt (Kurve w). Diese ungleiche Einstellung der Momente der einzelnen Zylinder führt zu einer Erhöhung der Laufunruhe des Motors, also der Drehzahl n_{LR}. Tritt eine solche Erhöhung auf, ist der Verbrennungsmotor aktiv.

Nach der aktiven Veränderung des Zündwinkels wird zum normalen Betriebszustand des Verbrennungsmotors 1 im Bereich C zurückgekehrt.
Der Fahrer nimmt diese Laufunruhe über die ihm angezeigte Drehzahl nicht wahr.

## Patentansprüche

1. Verfahren zur Erkennung eines laufenden Verbrennungsmotors (1) bei einem Hybridfahrzeug, bei welchem der Verbrennungsmotor (1) als erstes Antriebsaggregat und ein zweites Antriebsaggregat (2) einen Beitrag zum Antrieb des Hybridfahrzeugs leisten, wobei aktiv ein Störsignal in den laufenden Betriebsablauf des Verbrennungsmotors (1) eingebracht wird und die Reaktion des Verbrennungsmotors (1) auf dieses Störsignal ausgewertet wird, wobei bei einer ausbleibenden Reaktion des Verbrennungsmotors (1) darauf geschlossen wird, dass der Verbrennungsmotor (1) nicht arbeitet, **dadurch gekennzeichnet, dass** mindestens ein Verbrennungsparameter (5) des Verbrennungsmotors (1) geändert wird und eine Laufunruhe (n_{LR}) des Verbrennungsmotors (1) überwacht wird, wobei bei Ausbleiben einer Veränderung der Laufunruhe (n_{LR}) infolge der Änderung des Verbrennungsparameters (δ) darauf geschlossen wird, dass dauerhafte Aussetzer auf allen Zylindern des Verbrennungsmotors (1) auftreten.

2. Verfahren nach Anspruch 1, **dadurch gekennzeichnet, dass** als Verbrennungsparameter der Zündwinkel (δ) mindestens eines Zylinders des Verbrennungsmotors (1) aktiv verstellt wird.

3. Verfahren nach Anspruch 2, **dadurch gekennzeichnet, dass** der Zündwinkel (δ) der Zylinder so eingestellt wird, dass bei einer vorgegebenen Anzahl von Zylindern eine verzögerte Zündung eintritt, während bei einer gleichen Anzahl von Zylindern eine vorzeitige Zündung auftritt.

4. Verfahren nach Anspruch 3, **dadurch gekennzeichnet, dass** die Verstellung der Zündwinkel (δ) mehrfach wiederholt wird.

5. Verfahren nach Anspruch 1, **dadurch gekennzeichnet, dass** als Verbrennungsparameter eine Einspritzmenge verstellt wird.

6. Verfahren nach Anspruch 1, **dadurch gekennzeichnet, dass** das Störsignal verstärkt wird oder die Häufigkeit des Auftretens des Störsignals erhöht wird.

7. Vorrichtung zur Erkennung eines laufenden Verbrennungsmotors bei einem Hybridfahrzeug, bei welchem der Verbrennungsmotor (1) als erstes Antriebsaggregat und ein zweites Antriebsaggregat (2) einen Beitrag zum Antrieb des Hybridfahrzeugs leisten, wobei Mittel (18) vorhanden sind, die aktiv ein Störsignal in den laufenden Betriebsablauf des Verbrennungsmotors (1) einbringen und die Reaktion des Verbrennungsmotors (1) auf dieses Störsignal auswerten, wobei bei einer ausbleibenden Reaktion des Verbrennungsmotors (1) darauf geschlossen wird, dass der Verbrennungsmotor (1) nicht arbeitet, **dadurch gekennzeichnet, dass** die Mittel (18) mindestens einen Verbrennungsparameter (5) des Verbrennungsmotors (1) ändern und eine Laufunruhe (n_{LR}) des Verbrennungsmotors (1) überwachen, wobei bei Ausbleiben einer Veränderung der Laufunruhe (n_{LR}) darauf geschlossen wird, dass dauerhafte Aussetzer auf allen Zylindern des Verbrennungsmotors (1) auftreten.

8. Vorrichtung nach Anspruch 7, **dadurch gekennzeichnet, dass** ein Drehzahlmesser (19) die Laufunruhe (n_{LR}) des Verbrennungsmotors (1) überwacht.

## Claims

1. Method for detecting a running internal combustion engine (1) in a hybrid vehicle, in which the internal combustion engine (1), as the first drive assembly, and a second drive assembly (2) make a contribution to driving the hybrid vehicle, wherein an interference signal is actively input in to the running operational sequence of the internal combustion engine (1), and the reaction of the internal combustion engine (1) to this interference signal is evaluated, wherein when a reaction of the internal combustion engine (1) fails to occur it is inferred that the internal combustion engine (1) is not working, **characterized in that** at least one combustion parameter (δ) of the internal combustion engine (1) is changed, and irregular running (n_{LR}) of the internal combustion engine (1) is monitored, wherein when a change in the irregular running (n_{LR}) fails to occur owing to the change in the combustion parameter (δ) it is inferred that continuous misfires are occurring at all the cylinders of the internal combustion engine (1).

2. Method according to Claim 1, **characterized in that** the ignition angle (δ) of at least one cylinder of the internal combustion engine (1) is actively adjusted as the combustion parameter.

3. Method according to Claim 2, **characterized in that** the ignition angle (δ) of the cylinders is set in such a way that at a predefined number of cylinders a delayed ignition occurs, while in the case of an equal number of cylinders premature ignition occurs.

4. Method according to Claim 3, **characterized in that** the adjustment of the ignition angle (δ) is repeated multiple times.

5. Method according to Claim 1, **characterized in that** an injection quantity is adjusted as a combustion parameter.

6. Method according to Claim 1, **characterized in that** the interference signal is amplified or the frequency of the occurrence of the interference signal is increased.

7. Device for detecting a running internal combustion engine in a hybrid vehicle, in which the internal combustion engine (1), as a first drive assembly, and a second drive assembly (2) make a contribution to driving the hybrid vehicle, wherein means (18) are present which actively input an interference signal into the running operational sequence of the internal combustion engine (1) and evaluate the reaction of the internal combustion engine (1) to this interference signal, wherein when a reaction of the internal combustion engine (1) fails to occur it is inferred that the internal combustion engine (1) is not operating, **characterized in that** the means (18) change at least one combustion parameter (δ) of the internal combustion engine (1) and monitor irregular running (n_{LR}) of the internal combustion engine (1), wherein when a change in the irregular running (n_{LR}) fails to occur it is inferred that continuous misfires are occurring at all the cylinders of the internal combustion engine (1).

8. Device according to Claim 7, **characterized in that** a revolution counter (19) monitors the irregular running (n_{LR}) of the internal combustion engine (1).

## Revendications

1. Procédé pour détecter qu'un moteur à combustion interne (1) d'un véhicule hybride est en fonctionnement, dans lequel le moteur à combustion interne (1) contribue comme premier ensemble d'entraînement à entraîner le véhicule hybride de même qu'un deuxième ensemble d'entraînement (2), un signal parasite étant apporté activement dans le déroulement du fonctionnement du moteur à combustion interne (1) et la réaction du moteur à combustion interne (1) à ce signal parasite étant évaluée, et en cas d'absence de réaction du moteur à combustion interne (1), il est conclu que le moteur à combustion interne (1) ne fonctionne pas,
**caractérisé en ce que**
au moins un paramètre de combustion (δ) du moteur à combustion interne (1) est modifié et une perturbation (n_{LR}) du fonctionnement du moteur à combustion interne (1) est surveillée, l'absence d'une modification de la perturbation (n_{LR}) du fonctionnement suite à la modification du paramètre de combustion (δ) entraînant la conclusion que des ratés durables ont lieu sur tous les cylindres du moteur à combustion interne (1).

2. Procédé selon la revendication 1, **caractérisé en ce que** le paramètre de combustion modifié activement est l'angle d'allumage (δ) d'au moins un cylindre du moteur à combustion interne (1).

3. Procédé selon la revendication 2, **caractérisé en ce que** l'angle d'allumage (δ) du cylindre est ajusté de telle sorte qu'un allumage retardé ait lieu sur un nombre prédéterminé de cylindres, tandis qu'un allumage précoce ait lieu sur un nombre identique de cylindres.

4. Procédé selon la revendication 3, **caractérisé en ce que** l'ajustement de l'angle d'allumage (δ) est répété plusieurs fois.

5. Procédé selon la revendication 1, **caractérisé en ce que** le paramètre de combustion ajusté est la quantité injectée.

6. Procédé selon la revendication 1, **caractérisé en ce que** le signal parasite est amplifié ou la fréquence de la survenance du signal parasite est augmentée.

7. Dispositif pour détecter qu'un moteur à combustion interne d'un véhicule hybride fonctionne, dans lequel le moteur à combustion interne (1) contribue en tant que premier ensemble d'entraînement à l'entraînement du véhicule hybride de même qu'un deuxième ensemble d'entraînement (2), des moyens (18) étant prévus pour apporter activement un signal parasite dans le déroulement du fonctionnement du moteur à combustion interne (1) et pour évaluer la réaction du moteur à combustion interne (1) à ce signal parasite, et en cas d'absence de réaction du moteur à combustion interne (1), il est conclu que le moteur à combustion interne (1) ne fonctionne pas,
**caractérisé en ce que**
les moyens (18) modifient au moins un paramètre de combustion (δ) du moteur à combustion interne (1) et surveillent une perturbation (n_{LR}) du fonctionnement du moteur à combustion interne (1) et
**en ce qu'**en cas d'absence de modification de la perturbation de fonctionnement (n_{LR}), il est conclu que des ratés durables ont eu lieu sur tous les cylindres du moteur à combustion interne (1).

8. Dispositif selon la revendication 7, **caractérisé en ce qu'**un dispositif (19) de mesure de vitesse de rotation surveille la perturbation du fonctionnement (n_{LR}) du moteur à combustion interne (1).
